(19) Europäisches Patentamt
European Patent Office
Office européen des brevets

(11) **EP 4 293 067 A1**

(12) **DEMANDE DE BREVET EUROPEEN**

(43) Date de publication:
**20.12.2023 Bulletin 2023/51**

(21) Numéro de dépôt: **23178076.8**

(22) Date de dépôt: **07.06.2023**

(51) Classification Internationale des Brevets (IPC):
**C08J 3/12** *(2006.01)*   **C08J 11/04** *(2006.01)*
**B29B 17/04** *(2006.01)*

(52) Classification Coopérative des Brevets (CPC):
**C08J 3/12;** B29B 17/02; B29B 17/0404;
B29B 2017/0268; B29K 2027/06; B29L 2031/707;
C08J 2300/30; C08J 2327/06

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**KH MA MD TN**

(30) Priorité: **13.06.2022 BE 202205460**

(71) Demandeur: **Brussels Recycling Metal (BR Met)
SA**
**1130 Bruxelles (BE)**

(72) Inventeur: **HUNTZ, Pierre-Marie**
**1060 Bruxelles (BE)**

(74) Mandataire: **Kirkpatrick**
**Avenue Wolfers, 32**
**1310 La Hulpe (BE)**

(54) **POUDRE MICRONISÉE EN PVC MOU RECYCLÉ ET ARTICLES FABRIQUÉS À BASE DE CETTE POUDRE**

(57)    L'invention concerne le recyclage du PVC souple, sous forme de poudre micronisée, de façon à pouvoir le réintroduire dans des procédés de fabrication d'objets en PVC.

Fig.1

**Description**

L'invention se situe dans le domaine de la plasturgie et en particulier du recyclage du PVC souple.

Le chlorure de polyvinyle, connu sous l'abréviation PVC est un polymère plastique de très grande consommation obtenu à base de dérivés pétroliers et de chlorures minéraux (sel de mer, acide chlorhydrique, ...) Il existe deux types de PVC : le PVC rigide, utilisé pour la fabrication de très nombreux objets, articles, dans tous les domaines techniques (canalisations, cartes de crédit, emballages, châssis...), et le PVC souple (ou plastifié) utilisé notamment pour fabriquer des fibres textiles, des poches de liquides médicaux, des jouets ou pour enrober les câbles électriques.

Le PVC est obtenu par une réaction de polymérisation irréversible du monomère chlorure de vinyle. Les divers types de PVC dépendent des additifs et des conditions réactionnelles. Le PVC vierge, avant mise en forme, se présente généralement sous forme d'une poudre blanche.

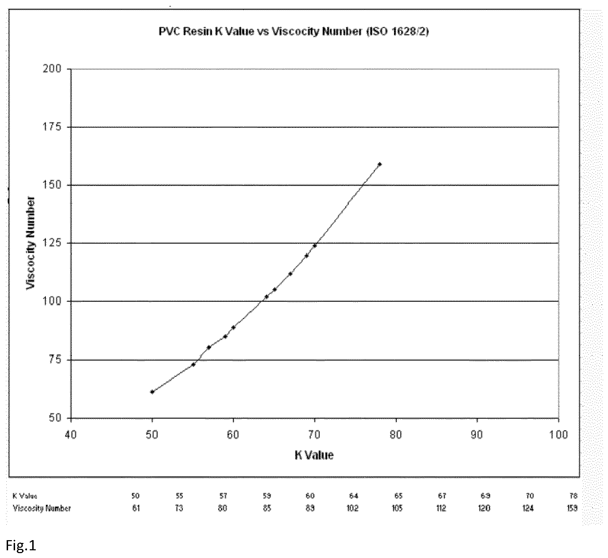

Le PVC souple est obtenu par ajout de plastifiants qui en diminuent la température de transition vitreuse (typiquement entre -5 et -50 °C pour un PVC souple contre 60 à 100°C pour un PVC rigide), la densité (typiquement 1.1 à 1.35 g/cm$^3$ pour un PVC souple, i.e. comprenant au moins un agent plastifiant, contre 1.35 à 1.45 g/cm$^3$ pour un PVC rigide), et la résistance à la traction (typiquement 6.9 à 25 MPa pour un PVC souple contre 34 à 62 MPa pour un PVC rigide). Les agents plastifiants sont par exemple des phtalates, des adipates, des plastisols ou des huiles. Le PVC souple se différencie également du PVC rigide par la longueur des chaines de polymérisation ou son poids moléculaire, qui est mesurée par la valeur K (K Value) : valeur K > 67 pour des PVC souples ou plastifiés contre une valeur K≤67 pour des PVC rigides. Cette valeur est liée à l'indice de viscosité (cf. Fig. 1) .

Le recyclage du PVC en fin de vie se fait par broyage dans un déchiqueteur pour former des paillettes qui peuvent ensuite être réextrudées ou utilisées pour du moulage par injection. Il est important de signaler que la stabilité thermique n'est pas remise en cause par les différentes étapes de broyage. Actuellement, seul le PVC rigide est réutilisé sous cette forme, qui est moins adaptée et flexible pour recycler le PVC souple.

Une des difficultés du recyclage est également souvent la contamination du PVC. En effet, le PVC est souvent associé à d'autres éléments, dont il est nécessaire de le séparer, pour reformer une source de PVC effectivement réutilisable.

Des paillettes de PVC contaminées peuvent conduire notamment à des défauts substantiels dans une nouvelle pièce extrudée à partir de ces paillettes. Ceci compromet non seulement l'aspect de cette pièce, mais également son intégrité physique, ses propriétés mécaniques, etc....

C'est en particulier le cas pour le PVC souple utilisé pour l'enrobage des câbles électriques métalliques. La séparation du PVC et du métal est difficile et les résidus métalliques ainsi que les additifs contenus dans le PVC compromettent le recyclage de ce PVC et peuvent nuire aux machines d'extrusion et d'injection

Il existe des procédés pour purifier le PVC souple, comme celui utilisé dans les gaines de câble, afin d'obtenir des granules. La première étape est généralement un broyage du plastique en particules, suivis de procédés de séparation des impuretés utilisant des solvants, tables densimétriques pour séparer les résidus métalliques, séchage des granules... comme par exemple décrits dans WO9521732.

Des programmes comme VinylPlus ont permis d'améliorer le recyclage du PVC, en y intégrant du PVC souple, et en identifiant des solutions de séparation et de purification du PVC ayant un moindre impact environnemental (moins énergivore, moins d'émissions de dérivés chlorés).

Subsiste le problème de la qualité et de la réutilisabilité du recyclât du PVC souple qui ne permet pas de remettre en forme de façon satisfaisante les granules de PVC souple obtenues dans des procédés classiques de formage comme l'extrusion, le moulage, ...

La demanderesse a donc jugé utile de proposer une forme de PVC souple permettant sa réincorporation effective dans divers procédés.

**Solution d'invention**

Il s'agit d'une poudre micronisée comprenant au moins 80% de PVC souple recyclé. Les pourcentages s'entendent en masse, i.e. des pourcentages massiques.

La poudre micronisée selon l'invention comprend de préférence au moins 85% de PVC souple recyclé, de préférence au moins 90% de PVC souple recyclé, au moins 95% de PV souple recyclé, au moins 98% de PVC souple recyclé, voire n'est constituée que de PVC souple recyclé.

Le PVC souple recyclé peut s'entendre comme du PVC souple ayant subi des étapes de broyage et/ou de purification, éventuellement poussées pour obtenir un degré de pureté élevé. Ce PVC souple recyclé subit enfin une étape de micronisation pour obtenir la granulométrie désirée.

Par exemple, le PVC souple recyclé provient de consommables médicaux (poches de liquide, tubes...), de jouets, de chaussures, de liners, de gaines de câbles électriques... De préférence, le PVC souple recyclé provient de gaines de câbles électriques. Il a été séparé du métal autour duquel il était associé et peut avoir subi des étapes de purification.

Le PVC souple peut être caractérisé par une température de transition vitreuse inférieure à 50 °C, de préférence inférieure à 0 °C.

Alternativement, ou en complément, il peut être caractérisé par une densité entre 1.1-1.5 g/cm$^3$, de préférence entre 1.1 et 1.35 g/cm$^3$.

Alternativement, ou en complément, il peut être caractérisé par une résistance à la traction comprise entre 6.9 et 25 MPa (1000-3625 PSI), mesurée par exemple selon la méthode standard ASTM D638.

Alternativement, ou en complément, il peut être caractérisé par un indice de viscosité supérieur ou égale à 112 et/ou une valeur K supérieure ou égale à 67.

De préférence, la poudre micronisée selon l'invention a une granulométrie moyenne inférieure à 900 $\mu$m. De préférence, la granulométrie moyenne est comprise entre 10 $\mu$m à 800 $\mu$m, de préférence entre 50 $\mu$m et 600 $\mu$m et de préférence encore entre 100 $\mu$m et 400 $\mu$m.

De préférence, la répartition granulométrique, mesurée par diffraction laser, est de :

$$d(50) \leq 200 \ \mu m,$$

$$d(90) \leq 300 \ \mu m.$$

Cette granulométrie est de préférence homogène dans la poudre, avec de préférence 90% des particules ayant une granulométrie variant de 10% autour de la granulométrie moyenne.

La poudre micronisée comprend au moins 80% de PVC souple recyclé, et de préférence entre 85% et 100% de PCV souple, de préférence entre 88% et 98% de PVC souple, de préférence entre 90% et 97% et de préférence encore entre 92% et 96% de PVC souple.

Les impuretés comprennent typiquement des additifs, comme par exemple des retardateurs de flamme, du métal résiduel et/ou des plastifiants.

De préférence, la poudre micronisée de l'invention comprend entre 0 et 6% de résidu métallique, de préférence entre 0.5 et 5% de résidu métallique, et de préférence encore entre 0.01 et 3% ou entre 0.02 et 1%.

L'invention est également relative à l'utilisation de la poudre micronisée. Plusieurs types d'utilisations sont envisageables. Tout d'abord, la poudre de l'invention peut être utilisée comme additif dans la formation d'articles en plastique. Elle peut par exemple être combinée à du plastique vierge pour extruder, mouler (par injection, soufflage, compression ou autre) ou thermoformer des articles à base de plastique.

Ensuite, la poudre de l'invention peut être utilisée comme base principale pour la formation de granules, qui peuvent ensuite servir de base à d'autres procédés de formation de matériau plastiques, de préférence de matériaux en PVC souple.

Dans ce cas, la méthode envisagée comprend les étapes suivantes :

- On extrude la poudre selon l'invention pour obtenir des granules de PVC souple recyclé.

Optionnellement, avant l'extrusion, on mélange la poudre selon l'invention avec des additifs.

L'invention couvre donc également des granules comprenant au moins 80 % de PVC souple recyclé.

Les granulats habituellement obtenus lors des tentatives de recyclage de PVC souple concentrent par endroits d'assez grandes quantités d'impuretés, ce qui d'une part rend difficile tout procédé d'extrusion, de moulage ou de lamination, et induit de gros défauts à certains endroits qui portent atteinte à l'intégrité physique du produit obtenu. La nature micronisée de la poudre de l'invention permet de répartir de façon homogène les éventuelles impuretés et d'en réduire l'impact. Ainsi, les défauts qui pourraient être induits par ces impuretés se retrouvent minimisés et ne portent pas atteinte aux propriétés mécaniques de l'article final.

Finalement, la poudre selon l'invention ou les granules selon l'invention peuvent être utilisées pour fabriquer des articles en PVC recyclé.

Dans un mode de réalisation, la fabrication d'articles en PVC recyclé comprend une étape d'extrusion.

Dans un autre mode de réalisation, la fabrication d'articles en PVC souple recyclé comprend une étape de moulage, d'intrusion et/ou de thermoformage, qui peut par exemple être du moulage par compression, par injection, par soufflage, ou toute autre technique appropriée.

Par exemple, un article en PVC recyclé obtenu à partir de la poudre ou des granules selon l'invention peut être un joint profilé. Un tel joint utilise les propriétés élastiques du PVC souple. Ce joint peut avoir une section pleine ou une section creuse. Il peut avoir par exemple une section carrée, rectangulaire, triangulaire, circulaire ou polygonale.

L'invention sera mieux comprise à l'aide de la description de plusieurs modes de réalisations, correspondant au dessin sur lequel :

- La figure 1 est un graphe illustrant la corrélation pour le PVC entre l'indice de viscosité et la valeur K.

Une poudre selon l'invention est par exemple préparée à partir de PVC souple d'enrobage de câbles métalliques.

La gaine isolante de câbles plastiques est souvent formée à partir de deux couches superposées de PVC ayant des propriétés différentes, par exemple une couche de PVC TI2 et une couche de PVC TM2. Ces PVC contiennent typiquement une proportion élevée de plastifiants comme des phtalates ou des esters de phosphate, du carbonate de calcium, des hydroxydes d'aluminium et/ou d'autres éléments minéraux.

Dans un premier temps, des câbles dont la couche d'isolation est en PVC souple sont broyés. Le broyat est traité pour séparer le métal du PVC. Ce traitement peut comprendre les étapes classiques de séparation du PVC et du métal, bien connu de l'homme du métier. Il peut par exemple comprendre l'utilisation de table densimétrique, des moyens électrostatiques ou l'utilisation de solvants. Ces techniques permettent généralement d'obtenir des particules de PVC souple ayant une teneur en PVC de 80% ou plus. Si un degré de pureté plus élevé est souhaité, le PVC séparé peut être purifié plus avant pour réduire ou éliminer la présence de certains additifs. Ces techniques sont également bien connues de l'homme du métier.

Les particules ainsi obtenues sont alors micronisées. Les équipements de micronisation peuvent être identiques à celles utilisées pour le PVC rigide, en fonction de la granulométrie souhaitée. De tels équipements sont par exemple fabriqués par la société Herbold.

Si nécessaire, la poudre obtenue est homogénéisée, par exemple dans un silo à flux continu.

Une poudre obtenue par ce procédé a le profil granulométrique suivant :

$d(50) \leq 200\ \mu m$, $d(90) \leq 300\ \mu m$, mesurée par diffraction laser.

Cette poudre a été utilisée pour extruder un joint profilé, ici de section carrée de côté 25 mm et ayant une longueur de 3000 mm. La surface de ce joint est relativement lisse et ne présente pas d'irrégularités.

Sa résistance mécanique a été évaluée selon plusieurs critères, mesurés conformément à la norme ISO 527 :

> Résistance à l'élongation (tensile strength) : 913 N
> Déformation à l'élongation (strain at tensile strength) : 8.3%
> Allongement à la rupture (strain at break) : 9.2 %
> Contrainte à la rupture (stress at break) : 261 N

La dureté du matériau a été mesuré selon la norme ISO 868 (2003) : 84.

Le joint profilé a été soumis à 10 000 cycles de déflexion latérale de 10 cm, sans observer d'altération.

Soumis à une charge de 2 tonnes, le joint est comprimé à 50% mais le produit ne montre pas de déchirures de surface ni de dommages.

Il a donc été démontré que la poudre de l'invention, obtenue à partir de PVC souple recyclé est tout à fait réutilisable et valorisable dans des procédés de formation de nouveaux articles en PVC souple.

Un autre exemple d'utilisation de la poudre de l'invention est son utilisation comme additif à du PVC vierge, pour fabriquer des articles comme des revêtements de sol, des liners pour la construction. La poudre selon l'invention peut représenter de 0.5% à quelques % du nouveau matériau. Ainsi dilué, il évite l'incinération ou le rebut, sans altérer notablement les propriétés du matériau vierge.

## Revendications

**1.** Poudre micronisée comprenant au moins 80% de PVC souple recyclé, dans laquelle le PVC souple est **caractérisé par** une température de transition vitreuse inférieure à 50 °C et une résistance à la traction mesurée, selon la méthode standard ASTM D638, comprise entre 6.9 et 25 MPa, la poudre micronisée ayant une granulométrie moyenne mesurée par diffraction laser inférieure à 900 $\mu m$.

**2.** Poudre micronisée selon la revendication 1, dans laquelle le PVC souple est **caractérisé par** un indice de viscosité supérieur ou égale à 112.

**3.** Poudre micronisée selon l'une des revendications 1 et 2, dont le PVC souple recyclé provient de gaines de câbles électriques.

**4.** Poudre micronisée selon l'une des revendications 1 à 3, comprenant entre 0 et 6% de résidu métallique.

**5.** Utilisation de la poudre selon l'une des revendications 1 à 4 comme additif dans la formation d'articles en plastique.

**6.** Granules obtenus par extrusion de la poudre micronisée selon l'une des revendications 1 à 4.

**7.** Procédé d'obtention des granules selon la revendication 6 comprenant les étapes suivantes :

> - on extrude la poudre micronisée selon l'une des revendications 1 à 4 pour obtenir des granules de PVC recyclé.

**8.** Procédé selon la revendication 7, selon lequel, avant l'extrusion, on mélange la poudre micronisée avec des additifs.

**9.** Utilisation de la poudre micronisée selon l'une des revendications 1 à 4 ou des granules selon la revendication 5 pour fabriquer des articles comprenant du PVC recyclé.

**10.** Utilisation selon la revendication 9, ou la fabrication d'articles comprenant du PVC recyclé comprend une étape d'extrusion.

**11.** Utilisation selon la revendication 9, ou la fabrication d'articles comprenant du PVC recyclé comprend une étape de moulage.

PVC Resin K Value vs Viscocity Number (ISO 1628/2)

| K Value | 50 | 55 | 57 | 59 | 60 | 64 | 65 | 67 | 69 | 70 | 78 |
|---|---|---|---|---|---|---|---|---|---|---|---|
| Viscocity Number | 61 | 73 | 80 | 85 | 89 | 102 | 105 | 112 | 120 | 124 | 159 |

Fig.1

| | | Europäisches Patentamt | | |
| | | European Patent Office | **RAPPORT DE RECHERCHE EUROPEENNE** | **Numéro de la demande** |
| | | Office européen des brevets | | **EP 23 17 8076** |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | KR 2016 0026279 A (GWON GEUN BEOM [KR]) 9 mars 2016 (2016-03-09) * abrégé * * figures 1-6 * * revendications 1, 5, 6 * | 6-8 | INV. C08J3/12 C08J11/04 B29B17/04 |
| X | JP 2008 184510 A (KOBELCO ECO SOLUTIONS CO LTD) 14 août 2008 (2008-08-14) | 1-3,5, 9-11 | |
| Y | * abrégé * * alinéa [0033] * * exemples 1-16 * * revendications 1, 4, 5 * | 6-8 | |
| X | US 2009/050720 A1 (KIKUCHI MASAFUMI [JP] ET AL) 26 février 2009 (2009-02-26) | 1,2,4 | |
| Y | * alinéas [0002], [0058] * * Example * * revendication 1 * | 6-8 | |
| X | US 2022/098396 A1 (GUPTA VIRENDRA KUMAR [IN] ET AL) 31 mars 2022 (2022-03-31) | 1,2,5,9, 10 | DOMAINES TECHNIQUES RECHERCHES (IPC) |
| Y | * alinéas [0012], [0037] – [0040] * * Experimental Details * * revendications 1, 3, 10, 11 * | 6-8 | C08J |
| X | JP 2000 256524 A (MITSUBISHI CHEM MKV CO) 19 septembre 2000 (2000-09-19) * abrégé * * exemples 1, 2 * * revendication 1 * | 1,2,5,9, 11 | |
| A | US 5 199 652 A (MIKOFALVY BELA K [US] ET AL) 6 avril 1993 (1993-04-06) * colonne 5, lignes 54-68 * * exemples 1-3 * * revendications 1, 2, 10, 11 * | 1-11 | |

-/--

Le présent rapport a été établi pour toutes les revendications

| Lieu de la recherche | Date d'achèvement de la recherche | Examinateur |
|---|---|---|
| Munich | 18 octobre 2023 | Vandoolaeghe, P |

page 1 de 2

Europäisches Patentamt

European Patent Office

Office européen des brevets

**RAPPORT DE RECHERCHE EUROPEENNE**

Numéro de la demande

EP 23 17 8076

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | CN 103 509 275 A (CHUZHOU FULI KESI WIRE AND CABLE CO LTD) 15 janvier 2014 (2014-01-15) * abrégé * * alinéas [0014] – [0017] * * revendications 1, 2 * ----- | 1-11 | |
| A | DIETRICH BRAUN: "Recycling of PVC", PROGRESS IN POLYMER SCIENCE, vol. 27, 1 janvier 2002 (2002-01-01), pages 2171-2195, XP055034279, DOI: 10.1016/S0079-6700(02)00036-9 * le document en entier * ----- | 1-11 | |
| A,D | WO 95/21732 A1 (DRZEVITZKY BERND [DE]; WALKE HANS JUERGEN [DE]; LEITZKE HARTMUT [DE]) 17 août 1995 (1995-08-17) * page 1, lignes 6-13 * * revendications 1-28 * ----- | 1-11 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Munich | 18 octobre 2023 | Vandoolaeghe, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
......................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 23 17 8076

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-10-2023

| Document brevet cité au rapport de recherche | Date de publication | Membre(s) de la famille de brevet(s) | Date de publication |
|---|---|---|---|
| KR 20160026279 A | 09-03-2016 | AUCUN | |
| JP 2008184510 A | 14-08-2008 | AUCUN | |
| US 2009050720 A1 | 26-02-2009 | AUCUN | |
| US 2022098396 A1 | 31-03-2022 | EP 3914631 A1 | 01-12-2021 |
| | | US 2022098396 A1 | 31-03-2022 |
| | | WO 2020152637 A1 | 30-07-2020 |
| JP 2000256524 A | 19-09-2000 | AUCUN | |
| US 5199652 A | 06-04-1993 | CA 2090510 A1 | 29-08-1993 |
| | | EP 0557895 A1 | 01-09-1993 |
| | | US 5199652 A | 06-04-1993 |
| CN 103509275 A | 15-01-2014 | AUCUN | |
| WO 9521732 A1 | 17-08-1995 | AT E184824 T1 | 15-10-1999 |
| | | CA 2182979 A1 | 17-08-1995 |
| | | EP 0743892 A1 | 27-11-1996 |
| | | ES 2141335 T3 | 16-03-2000 |
| | | JP H09508595 A | 02-09-1997 |
| | | US 6123277 A | 26-09-2000 |
| | | WO 9521732 A1 | 17-08-1995 |

EPO FORM P0460

Pour tout renseignement concernant cette annexe : voir Journal Officiel de l'Office européen des brevets, No.12/82

**EP 4 293 067 A1**

## RÉFÉRENCES CITÉES DANS LA DESCRIPTION

**Documents brevets cités dans la description**

- WO 9521732 A